# EUROPEAN PATENT SPECIFICATION

(11) **EP 2 700 839 B1**
(45) Date of publication and mention of the grant of the patent: **05.10.2016**
(21) Application number: 12006059.5
(22) Date of filing: 24.08.2012
(51) Int. Cl.: F16F 7/01, E01B 3/00

(54) **Dissipative bulk and granular systems technology**
Dissipative Masse und granulare Systemtechnologie
Technologie de systèmes dissipatifs granulaires et en vrac

(43) Date of publication of application: 26.02.2014
(73) Proprietor: Emri, Igor, 1125 Ljubljana (SI); Von Bernstorff, Bernd-Steffen, 67157 Wachenheim (DE)
(72) Inventor: Emri, Igor, 1125 Ljubljana (SI); Von Bernstorff, Bernd-Steffen, 67157 Wachenheim (DE)
(74) Representative: Hörschler, Wolfram Johannes

(56) References cited:
- DE-U1- 9 307 059
- US-A- 4 011 929
- US-A1- 2007 012 530

## Description

The invention relates to a method for damping mechanical excitations including the steps of providing a damping element, which includes a viscoelastic material encapsulated in an adjustable container, and pressurizing said damping element. The invention further relates to a damping element for carrying out the method and its use for absorbing mechanical excitations in railway systems, automobile applications as well as mechanical and civil engineering.

Damping elements are generally used to damp mechanical excitations by absorbing mechanical energy impacting on a structure. Applications of such damping elements include for instance supports for industrial machines to damp vibrations, fundaments in building construction to reduce susceptibility to earthquake damage and resonance as well as trains and railway tracks to reduce vibrations during travel.

DE 203 018 708 U1 discloses a damping element made from recycled rubber granules, especially from old tyres. The granules in the outer layer are held together by a binder while the core contains free granules. In particular, recycled rubber granules are heat-pressed to a plate, wherein only the surface of the plate exhibits a higher density than the inner part of the plate. These damping elements maybe used in railway sleepers to damp vibrations.

Further damping elements known in the state of the art, such as the ones disclosed in DE 93 07 059 A1, include granules packed in an elastic cladding, which is permeable. Such a permeable cladding may comprise a fiber material or elastic fabric with a given density. The permeability of the cladding allows for air to be discharged, which reduces the heat development within the damping element.

US 2007/0012530 A1 is related to a bearing damper having dispersed friction damping elements. The bearing support apparatus is made of high temperature resistant materials in order that the bearing can be used in a high temperature environment such as a gas turbine engine. The bearing support includes an angular chamber that is filled with a plurality of spherical elements of balls made of a high temperature resistant material, such as ceramic, glass, carbon or stainless steel. The spherical elements are packed together such that a vibration causes the spherical elements to rub up against each other and dissipate the energy from the vibration. Another embodiment includes a flexible diaphragm within the angular chamber and a pressure fluid source to compact the spherical elements in order to vary the damping capability of the apparatus.

US 4,011,929 is related to a dampening device such as a silicone rubber. The damping device comprises a closed chamber, a movable piston rod extending through the chamber and an enlarged piston head located on the piston rod. Located in the interior space of the closed chamber under pressure is a compressible solid, fragmented, particulate mass of cured, unfilled silicone rubber composition for producing a damping effect on the piston rod and head. The damper device includes a threaded plug for varying the internal stating pressure on the compressible mass within the chamber and apertures extending through the piston head or an angular space between the outer edge of the piston head and the interior of the chamber for bypassing the compressible mass.

Such damping elements underlie high requirements when damping mechanical vibrations and effects like noise generation, heat generation, durability and efficiency of the construction need to be optimized.

Damping elements known in the art have the disadvantage that they utilize materials in their rubbery equilibrium state where they are time- and/or frequency-independent. In the rubbery equilibrium state material energy absorption is far away from its potential maximum. Frequency characteristics of such damping elements known in the art therefore depend on the construction and the material used. Consequently, such elements are not adjustable in frequency. Therefore, good performance cannot be provided for a wide frequency range, while still providing dimensional stability, durability as well as flexibility in application.

### Description of the invention

It is an object of the invention to provide damping elements that allow for substantial increased energy absorption within a frequency range adjustable to specific applications. It is a further object of the invention to provide a damping element that is independent of any constructive restrictions such as the shape of damping element and that is flexible in its application. Further objects of the invention include dimensional stability even under high loads as well as durability.

According to the invention a damping element for absorbing mechanical excitations comprising a container encapsulating a viscoelastic material is proposed, wherein the container is pressurized to a pressure level, at which the damping element's frequency for absorbing a maximum energy substantially matches a frequency of the mechanical excitation.

In the present context a viscoelastic material exhibits viscoelastic properties, where viscous and elastic characteristics play a role when undergoing deformation. Viscoelastic materials exhibit strong time, temperature, pressure, and rate or frequency dependence.

In the sense of the present application the pressure level inside the container is determined by the amount of viscoelastic material embedded inside the container and/or a mechanical load permanently applied to the damping element. Hence, the pressurization is realized by filling the container with viscoelastic material up to a certain level and/or applying a certain level of force to the container via a mechanical load. In this context the level corresponds to the pressure level, at which the damping element's frequency for absorbing a maximum energy substantially matches a frequency of the mechanical excitation. Substantially matching in this context refers to two at least partially overlapping frequency ranges. Hence, the frequency, at which the damping element absorbs the maximum energy, is included in the frequency range of the mechanical excitation.

The viscoelastic material comprises a bulk material exhibiting viscoelastic properties and/or a granular material. In this context a granular material is a conglomeration of discrete solids, macroscopic particles or grains, of different sizes. In the case of a granular material the particles or grains exhibit sizes from few nanometers up to 1cm, preferably 10 µm to 5 mm, and particularly preferably 10 µm to 3mm. Furthermore, the size distribution of particles or grains of the granular material should be sufficiently broad or of multimodal size distribution.

Furthermore, mechanical excitations in the context of the invention refer to static, continuous, periodic and/or impulse loads impacting on a structure. With respect to the damping element's properties its energy absorption spectrum characterizes, which mechanical excitations are damped by the damping element (response function). This may depend on the amplitude and/or frequency of the excitation and whether it is a static, continuous, periodic and/or impulse load.

The proposed damping element allows to optimally adjust the damping characteristics to the external conditions under which the mechanical excitations occur. Hence, the damping element is highly flexible in application and can easily be adapted to damp mechanical excitations specific to the application. In particular, the pressurization of a viscoelastic material results in a type of gas/liquid like behavior of the damping element, which allows to optimally adjust the damping properties to the frequency and/or the amplitude of the impinging excitations. Additionally, the pressurization of the damping element increases the dimensional stability of the container.

In a preferred embodiment, the container of the damping element is pressure-sealed. Furthermore, the container may at least partially be made of concrete, reinforced concrete, stones, natural rocks, metal, such as steel or aluminum, or other material, such as fabric from woven, knitted or winded glass-, basalt- and/or carbon fibers. If required, fabric may as well be embedded in a fiber-reinforced resin to form a composite. The container may be deformable, which can be achieved by producing the container at least partially of a fabric or fiber-based material. Preferably, the material used for containers is time-independent to maintain the high pressure over the damping element lifetime.

The size of the container, the pressure level and the amount of damping material used in a particular application depends on the excitation spectrum and the amount of the mechanical energy to be dissipated. Typical sizes to damp turbines or buildings would be the size of the supporting fundament; typical sizes of a damping element for damping railway tracks would be limited by the size of a sleeper. The size of the damping elements used in automotive industry would be limited by the size of a bumper.

Pressurization of the container is preferably set once depending on the application and the corresponding mechanical excitation spectrum. In order to realize pressurization of the damping element in production, the container comprises a connector for connecting it to an external pressure source. Such an external pressure source may include a cylinder-piston-type system connectable to the damping element. In such pressurization one may use a viscoelastic bulk or granular material, such as a properly selected molten polymer, as a pressurizing agent. In case of a bulk viscoelastic material, in particular a pressurizing polymer, the material preferably solidifies after the pressurization and remains solid throughout the lifetime of the damping element. Similarly a viscoelastic granular material may be used for pressurization. Alternatively, the pressure source may be simply a permanently applied mechanical loading to achieve the required internal pressure.

In another embodiment of the present invention, the pressure level of the damping element inside the container lies between 0.1 and 600 MPa, preferably between 0.5 to 300 MPa, and particularly preferably between 20 to 100 MPa. Owing to the viscoelastic properties of the damping element, the pressure within the container affects the volume of the container, particularly when it is deformable, and, thus, determines the response function of the damping element. Here, a high pressure level inside the container promotes the damping at low excitation frequencies, whereas a lower pressure allows for absorbing excitations with high frequencies. Hence, the energy absorption of the damping element may be adjusted to the excitation spectrum of the respective application.

In a further embodiment of the invention, the container encapsulating said viscoelastic material is designed to allow transmission of exciting mechanical loads through said viscoelastic material to a supporting structure. Thus, the container may be designed to allow transmission of exciting mechanical loads through said viscoelastic granular and/or bulk material to a supporting structure. When using the damping element for damping mechanical excitations in e.g. a bumper of a vehicle, the bumper may include the damping element and a bumper structure, wherein the bumper structure forms the supporting structure of the system.

In a preferred embodiment of the invention, the viscoelastic material is made of a time-dependent material, preferably rubber and/or thermoplastic material. In particular, a viscoelastic bulk and/or granular material is made of a time-dependent material, i.e. a material that itself exhibits viscoelastic properties. Such material may comprise rubber and/or thermoplastics, in particular Thermoplastic Polyurethane (TPU), Styrene Butadiene Rubber (SBR), Natural Rubber (NR), Polyurethane (PU), Polyethylene (PE), Polypropylene (PP), Polyvinylchloride (PVC), Polyamide (PA), Polyoxymethylene (POM), Polycarbonate (PC), Polybutylene Tereththalate (PBT), Polyethylenetereththalate (PET) and composition or blends thereof.

Preferably the pressure level inside the container determines the damping characteristics of the damping element, and owing to the pressurization of said damping element, its damping characteristics are adjusted. The damping characteristics in this sense include the amplitude and/or frequency of a response function of the damping element, which characterizes the mechanical excitations damped by the damping element. The excitation and the damped response may be detected and measured by commercially used equipment for measuring forces, displacements, velocities, accelerations and frequencies, such as load cells, strain gauges, accelerometers, and optical devices.

According to the invention a method for producing the damping element as described above is proposed, wherein the method comprises the steps:
(a) providing a container and a viscoelastic material;
(b) pressing the viscoelastic material into the container to reach a pressure level, where a frequency, at which said damping element absorbs a maximum energy, substantially matches a frequency of the mechanical excitation; and
(c) sealing the container to substantially maintain the pressure level of step (b).

In a preferred embodiment of the production process, the viscoelastic material is pressed into the container by a cylinder-piston type system. In such a system, the container may be attached to an outlet of the cylinder-piston type system through releasable connection means. Preferably, the container is made of a basalt-, glass-, or carbon-fiber tube, which further includes sealing means at the end portions. Herein, at least one end portion of the container may include releasable and sealable connection means for attachment to the outlet of the cylinder-piston type system.

Above described damping element is particularly simple and cost effective in its production and at the same time capable of a wide variety of applications. Furthermore, the damping element can simply be integrated into various applications with different support structures. The damping element of the invention may for instance be applied in railway systems, automotive applications, mechanical engineering, aerospace engineering, transport and naval engineering, and civil engineering.

By optimally damping vibrations of e.g. travelling trains the proposed damping element increases comfort for passengers and decreases wear of rail carriage or wagon parts, such as shock absorbers. The damping elements also decrease propagation of vibrations throughout the fundament and soil to the surrounding objects, i.e., buildings adjacent to railway tracks and subway lines. In automotive applications the proposed damping element may be comprised in vehicles. In vehicles including bodywork and bumper, the damping element may be embedded within parts of the bodywork and/or the bumper. Furthermore, the proposed damping element may be employed in mechanical engineering and civil engineering within a fundament carrying a construction. Examples are fundaments of buildings, in particular earthquake-safe houses, fundaments of vibrating machinery and crash barriers.

### Brief description of the drawings

Further features, embodiments, and advantages of the present invention will become apparent from the following detailed description, which is provided by way of example only, with reference to the drawings, wherein:
- Figure 1a: is a schematic illustration of a damping element filled with granular material for use in one or more embodiments of the present invention;
- Figure 1b: is an exploded view of the damping element according to Figure 1a exposed to shear and compression forces;
- Figure 2: is a diagram for illustration of the principle effect of pressure on nonlinear behavior of viscoelastic materials;
- Figure 3: is a schematic illustration of a wheel-rail contact generating vibrations;
- Figure 4: is an exemplary diagram illustrating the principle of reducing vibrations by matching the frequency, at which the viscoelastic material inside the damping element exhibits maximal damping properties with the frequency of the mechanical excitation,
- Figures 5a to 5c: are schematic illustrations of the process for producing a damping element according to the invention,
- Figure 6: shows an exemplary embodiment of a damping element as part of an automobile and a crash barrier;
- Figure 7: shows an exemplary embodiment of a damping element as part of a building fundament.

### Detailed description

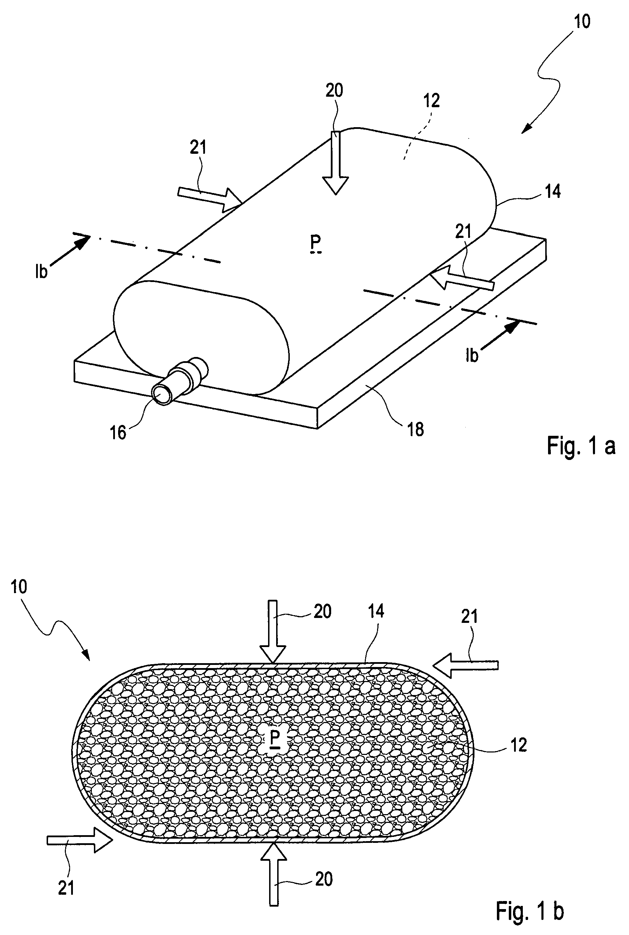

Figure 1a depicts a schematic illustration of a damping element 10 comprising a container 14 filled with a viscoelastic material 12.

In this embodiment the container 14 has cylindrical shape and is fixed to a supporting structure 18. Typically, the container 14 is made of concrete, reinforced concrete, stones, natural rocks, metal (such as steel or aluminum), or other material, such as a fabric from woven, knitted or winded glass-, basalt- and/or carbon fibers. If required, the fabric may as well be embedded in a fiber-reinforced resin to form a composite. Material used for containers 14 should be time-independent to maintain the high pressure over the damping element's 10 lifetime.

In this context, the choice of material and shape depends on the intended use of the damping element 10. For instance, a container 14 made of metal provides a dimensionally stable housing, which may be integrated into connections between rigid structures such as a building fundament or a railway sleeper. Furthermore, it is simple to provide for a pressure sealed container 14 when utilizing a metal. On the other hand, fibers are very flexible in their application and provide e.g. in the form of fiber-reinforced composites a light, but stable and pressure sealed container 14. Such damping elements 10 can for instance be integrated into car bumpers for absorption of shocks for example in case of a car crash.

In order to enable the viscoelastic material 12 encapsulated in the container 14 to optimally absorb mechanical excitation energy, the container 14 is pressurized when producing the damping element 10 in order to adjust the characteristic behavior of the damping element 10. In the process of producing the pressure inside the container 14 may be adapted through an external source of pressure 16, which include e.g. pumping means, a piston press and other means (not shown) to transport viscoelastic material 12 into the container 14. Here, the pumping means may be connected to the container 14 through piping and further means, such as valves and so on, which are used to regulate the pressure within the container 14. Alternatively, the pressure source 16 may be simply a permanently applied mechanical loading to achieve the required internal pressure within the container 14. In the context of the present invention, the pressure p within the container 14 is typically adjusted to exceed ambient pressure p_{ambient} of usually about 1 atmosphere (or equivalently about 100 kPa). The pressure p within the container 14 can, depending on the application of the damping element 10, amount to a pressure p between 0.1 and 1000 MPa.

Furthermore, the container 14 encapsulates a viscoelastic material 12, which can be a granular or bulk viscoelastic material. Here, the granulate material can comprise one type of granulate or a mix of different granulates depending on the application of the damping element 10. Examples of viscoelastic material 12 are rubber or thermoplasts like Thermoplastic Polyurethane (TPU), Styrene Butadiene Rubber (SBR), Natural Rubber (NR), Polyurethane (PU), Polyethylene (PE), Polypropylene (PP), Polyvinylchloride (PVC), Polyamide (PA), Polyoxymethylene (POM), Polycarbonate (PC), Polybutylene tereththalate (PBT), Polyethylenetereththalate (PET) and composition or blends thereof.

Figure 1b shows an exploded view of the damping element 10 according to Figure 1a exposed to compression and shearing forces 20, and 21.

In this embodiment, the viscoelastic material 12 encapsulated inside the container 14 is a granular viscoelastic material 12, which includes a conglomeration of discrete solid, macroscopic particles or grains of potentially different sizes and materials. When a compression force 20 or a shearing force 21 acts on the damping element 10 the granular material 12 or, more specifically, the individual grains of the granular material 12 will move and interact with each other. Through these interactions, typically collisions, mechanical excitation energy is most commonly absorbed through friction between the grains, and by material inherent viscoelastic dissipation of energy. Furthermore, when sheared the particles may either flow in a manner similar to a fluid or resist the shearing like a solid. This gives these types of flow a dual nature providing a wide variety of energy absorption properties of the proposed damping element 10. Granular materials are particularly useful in such applications, as they display a surprising range of collective behavior such as convection, size separation and pattern formation. Thus, the pattern of behavior the granular material exhibits, when exposed to vibrations, can be different in different applications, but also be adapted by adjusting the pressure inside the container 14.

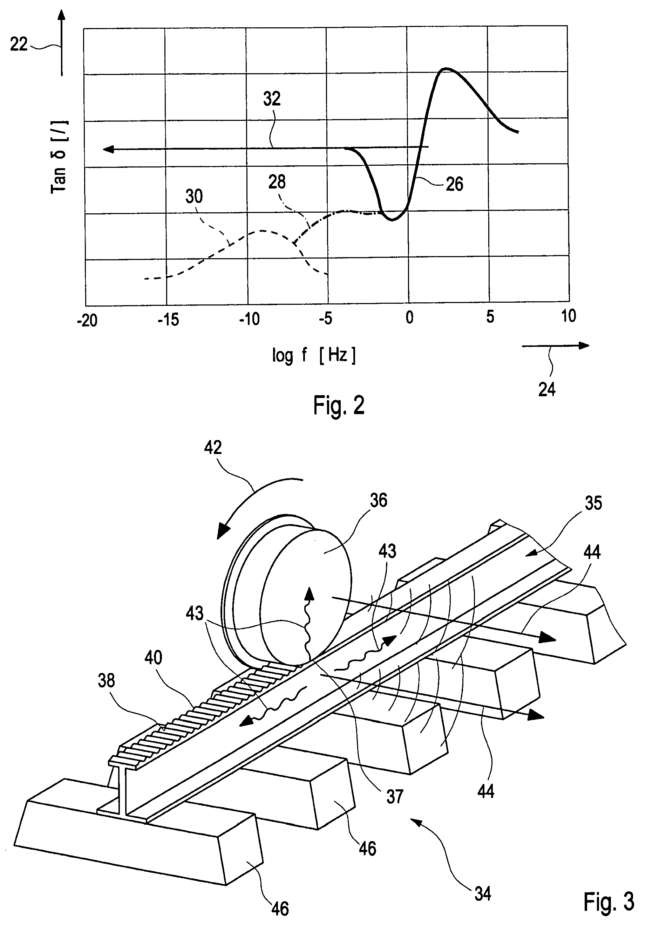

Figure 2 shows a diagram for illustration of the principle effect of pressure on the behavior of three different viscoelastic materials 12.

Here, the response functions 22 of three exemplary viscoelastic materials 12 are plotted against the logarithm of frequency 24. The response functions are calculated in terms of tan δ, which is a ratio of loss and storage modulus as explained in J.D. Ferry: Viscoelastic Properties of Polymers, John Wiley, Chapter 2, section "Loss tangent *".* The three materials whose damping parameters 22 were measured are Polyamide (PA) 30, Polyethylene (PE) 28, and Thermoplastic Polyurethane (TPU) 26. As can be seen from the graph in Figure 2, when properly modifying the hydrostatic pressure of bulk or granular materials, the viscoelastic damping properties 22 of the bulk or granules shift along the logarithmic frequency 24 axis. This is further indicated by the arrow 32 in Figure 2.

In Figure 3 a schematic illustration of vibrations produced in a rail system 34 including a rail 35 is depicted.

Here, a wheel 36 of e.g. a locomotive or a passenger cabin of a train moves on the rail surface 38 in the rotation direction 42, where the wheel 36 is in contact 37 with the rail surface 38. The rail surface 38 exhibits a surface roughness 40, which induces vertical vibrations 43 into the moving system of train and rails. This produces uncomfortable shocks to e.g. the passengers of the train and generates noise transmitting vibrations in different transmission directions 44. The vibrations caused by the surface roughness 40 of the rail surface 38 are transmitted via sleeper 46 to the ground and surroundings. In such a situation, the object of the present invention is to absorb the exciting mechanical energy and minimize the vibrations generated at the wheel-rail contact 37.

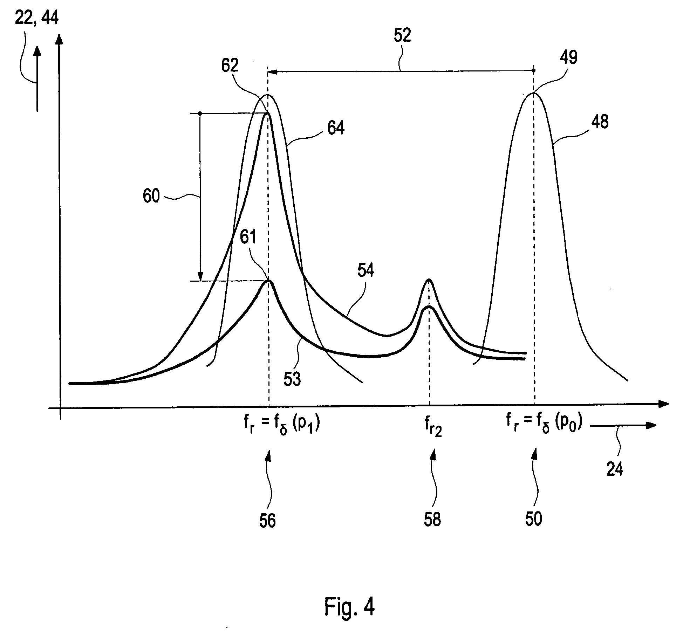

In order to achieve this object, the structural solution of a damping element 10 according to the invention embedded in sleepers 46 is based on pressurizing the viscoelastic material 12 housed in the container 14. This way, the damping properties may be adjusted through setting the pressurization to essentially match the frequency of the mechanical excitation and thus, optimally absorb the energy of the mechanical excitation, as will be explained in more detail in Figure 4.

Figure 4 schematically illustrates the reduction of vibrations 54 by matching the mean frequency f_{δ}(p₀) 50, at which the damping element 10 exhibits maximal damping properties 48 in an unpressurized state, i.e. at pressure p=p₀, with the mean frequency fᵣ 56 of the mechanical excitation with an amplitude 62.

By pressurizing the proposed damping element 10, the response function with center frequency f_{δ}(p₀) 50 shifts, as indicated by the arrow 52, from the frequency level 50 towards the lower frequency level fᵣ =f_{δ}(pₗ) 56, such that the damping peak 49 coincides with the peak 62 in the frequency distribution of the mechanical vibration 54. Thus, the damping properties 48 of the damping element 10 are adjusted to become 64 and, thus, optimally damp the exciting mechanical energy with frequency distribution 54. This results in a damped distribution for the mechanical energy 53. Therefore the peak 62 is reduced to 61 by an amount 60, as illustrated in Figure 4.
As a result, the pressure p inside the container 14 influences the damping properties of the damping element 10 including a container 14 encapsulating viscoelastic material 12. Hence, the damping properties of the damping element 10 can be controlled by adjusting the pressure p, such that the exciting vibration is optimally damped.

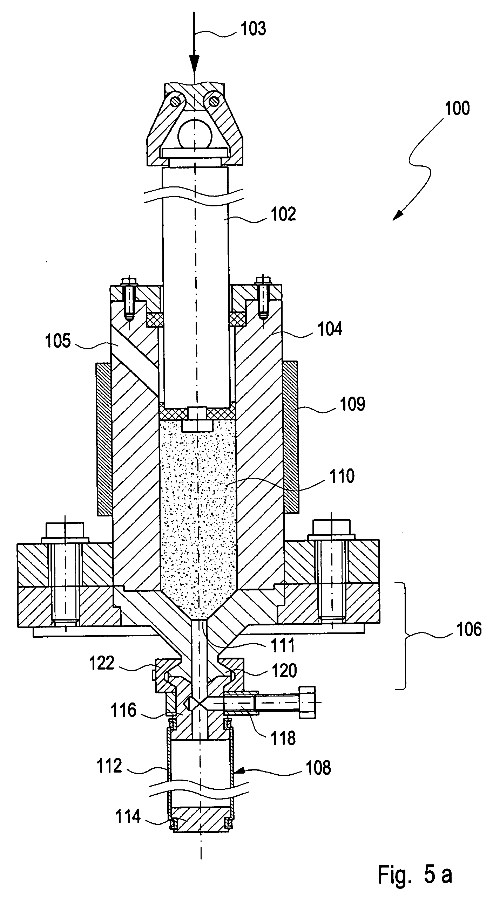

In Figures 5a to 5c embodiments of a process for producing a damping element 10 according to the invention are illustrated.

In this particular embodiment the damping element 10 may be produced of different materials. One example is to use a rubber as viscoelastic material 12 encapsulated under pressure inside a glass fiber tube as container 14. However, any other combination of material for the viscoelastic material 12 and the container 14 is possible as long as the viscoelastic material 12 and the container 14 exhibit the required properties as discussed above. The choice of material may influence the explicit production apparatus design and possibly the production process, but based on the description given below, the person skilled in the art may adapt the production apparatus and the production process accordingly.

One exemplary embodiment of an apparatus 100 for the production of a damping element 10 is shown in Figure 5a. In this embodiment the apparatus 100 comprises a piston 102 and cylinder 104, wherein the piston 102 is movably mounted inside the cylinder 104. The cylinder 104 comprises an inlet 105 for filling with a viscoelastic material 110, e.g. a polymer in a molten state or a viscoelastic granular material, into the cylinder 104. Optionally, the cylinder 104 is at least partially cladded by a heating element 109 for melting e.g. a viscoelastic bulk material 110 such as rubber granulate mixed with thermoplastic polymer, or for defining viscosity of said bulk material 110.

The cylinder 104 further comprises connection means 106 with an outlet 111 through which the viscoelastic material 110 inside the cylinder 104 can be pressed when moving the piston 102 in direction 103. On one end the connection means 106 are attached to the cylinder 104. The other end 120 provides further means to receive the container 108, which is to be filled with the viscoelastic material 110. In the embodiment shown in Figure 5a these comprise a releasable system based on a form closure between the respective ends of the connection means 106 and the container 108 using a clamp 122.

The container 108 includes sealable connection means 116 at the end facing the cylinder 104. In the exemplary embodiment shown in Figure 5a the seal is realized through a simple valve system 118. Here, the container is formed by the connection means 116, a tube 112 and a further sealed end 114. In Figure 5a the apparatus 100 is shown in a state, where the cylinder 104 is filled with the viscoelastic material 110 for transferring it into the container 108 by pressing the piston 102 into direction 103.

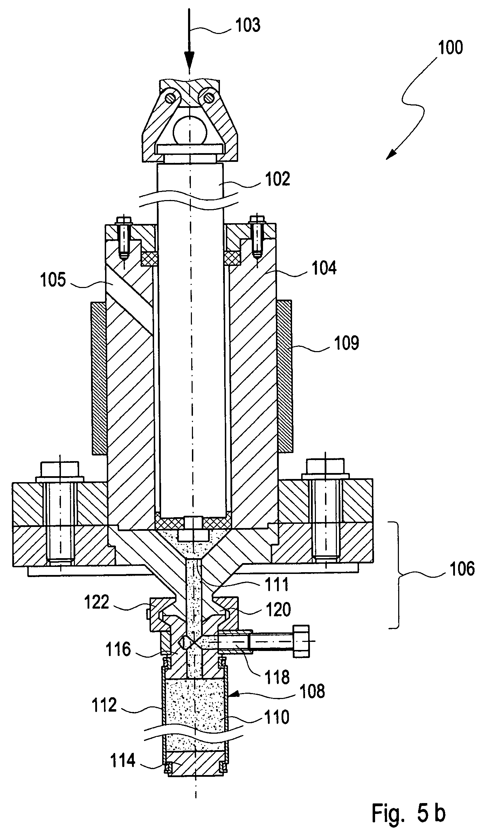

Figure 5b shows the state of the apparatus 100, in which the viscoelastic material 110 is transferred through the piston 102 into the container 108, where the viscoelastic material 110 is under pressure. After this transfer the container 108 can be detached from the cylinder-piston system 102, 104 by closing the valve 118 and opening the clamp 122.

Overall the production process thus includes providing a cylinder-piston system 102, 104 with a container 108 attached to it, filling the cylinder 104 with a viscoelastic material 110, pressing the piston 102 such that a certain pressure level is reached inside the container 108 and detaching the container 108 from the cylinder-piston system 102, 104.

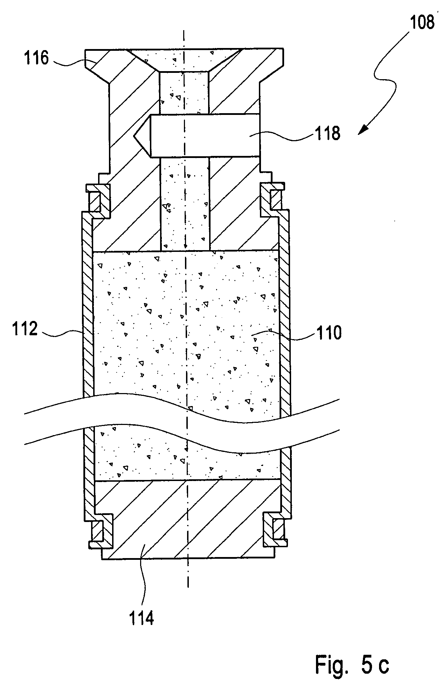

Figure 5c shows the damping element 108, 10 obtained by the production process described above. The damping element 108, 10 is sealed and comprises the tube 112 made from e.g. fiber glass and a viscoelastic material 110, such as granular rubber, under pressure. The pressure is adjusted when pressed into the container through the piston 102. Depending on the explicit combination of materials used for the container 112, 14 and the viscoelastic material 110, 12 and the pressure set, the damping element 10 is adjusted to have its maximum damping effect in a certain frequency ranged determined by the pressure level inside the container 108, 12.

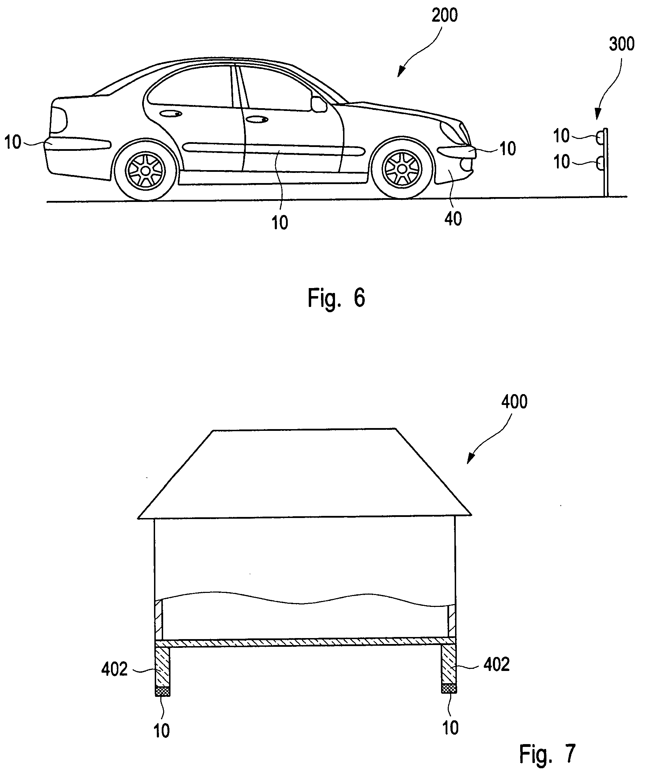

Figure 6 shows another potential application of a damping element 10 used in a car 200 bumper or road guidelines 300, in particular crash or guard barriers.

In the case of the car 200, the supporting structure 40 is part of or at least attached to the car, particularly a front or a rear bumper of the car 200. In this case, the container 14 of the damping element 10 housing viscoelastic material 12 is preferably made of woven, knitted or winded glass-, basalt-, and/or carbon fibers or any combination of these. Furthermore, the damping element 10 is not restricted in shape; however, a cylindrical or sock-like shape may be preferred, where the long axis of the cylinder is perpendicular to the axis along which the objects impinge e.g. on the bumper. A similar embodiment may be used in the context of crash barriers, where the sock-like damping element 10 may be attached to a supporting structure 300, such as crash barriers already known in the art.

Figure 7 shows another potential application for the proposed damping element 10, where the supporting structure 400 is part of a building fundament 402 and the loading is the weight of the building 400.

Such building fundaments 402 may be used to build earthquake-proof houses and/or dynamic machinery fundaments. Here the container 14 may be made of metal, concrete, natural rock, woven, knitted, winded glass-, basalt- and/or carbon-fibers or any combination of them. Again, the shape is not restricted; however, most preferred is a cylindrical shape with the cylinder along the axis of the fundament as shown in Figure 7.

Based on the foregoing information, it will be readily understood by those persons skilled in the art that the present invention is susceptible of broad utility and application. Many embodiments and adaptations of the present invention other than those specifically described herein, as well as many variations, modifications, and equivalent arrangements, will be apparent from or reasonably suggested by the present invention and the foregoing descriptions thereof, without departing from the substance or scope of the present invention.

Accordingly, while the present invention has been described herein in detail in relation to one or more preferred embodiments, it is to be understood that this disclosure is only illustrative and exemplary of the present invention and is made merely for the purpose of providing a full and enabling disclosure of the invention. The foregoing disclosure is not intended to be construed to limit the present invention or otherwise exclude any such other embodiments, adaptations, variations, modifications or equivalent arrangements; the present invention being defined by the claims appended hereto, taking account of the equivalents thereof.

## Claims

1. A damping element (10, 108) for absorbing mechanical excitations comprising a container (14, 112, 114, 116) encapsulating a viscoelastic material (12, 110), wherein the container (14, 112, 114, 116) is pressurized to a pressure level (p), at which said damping element's (10, 108) frequency (50) for absorbing a maximum energy (49), substantially matches a frequency of the mechanical excitation (56), the viscoelastic material (12, 110) comprising a bulk material, a granular material or a mixture of bulk and granular material.

2. The damping element (10, 108) according to claim 1, wherein said container (14, 112, 114, 116) is pressure-sealed and/or deformable.

3. The damping element (10, 108) according to claim 1 or 2, wherein the pressure (p) inside the container (14, 112, 114, 116) of said damping element (10, 108) lies between 0.1 and 1000 MPa, and preferably between 0.1 and 600 MPa.

4. The damping element (10, 108) according to any of the previous claims, wherein said container (14, 112, 114, 116) encapsulating said viscoelastic material (12, 110) is designed to allow transmission of exciting mechanical loads through said viscoelastic material to a supporting structure (18, 46).

5. The damping element (10, 108) according to any of the previous claims, wherein said viscoelastic material (12, 110) is made of a time-dependent material, preferably rubber and/or thermoplastic material.

6. The damping element (10, 108) according to any of the preceding claims, wherein the pressure level (p) inside the container (14, 112, 114, 116) determines the damping characteristics of the damping element (10, 108).

7. A method for producing a damping element (10, 108) according to one of the preceding claims, comprising the steps:
(a) providing a container (14, 112, 114, 116) and a viscoelastic material (12, 110);
(b) pressing the viscoelastic material (12, 110) into the container (14, 112, 114, 116) to reach a pressure level (p), where a frequency, at which said damping element (10, 108) absorbs a maximum energy (49), substantially matches a frequency of the mechanical excitation (56); and
(c) sealing the container (14, 112, 114, 116) to substantially maintain the pressure level (p) of step (b).

8. The method of claim 7, wherein the viscoelastic material (12, 110) is pressed into the container (14, 112, 114, 116) by a cylinder-piston type system (100).

9. The method of claim 7 or 8, wherein the container (14, 112, 114, 116) is attached to an outlet (111) of the cylinder-piston type system (100) through releasable connection means (116, 120, 122).

10. The method of claims 7 to 9, wherein the container (14, 112, 114, 116) is made of a glass-, and/or basalt-, and/or graphite-fiber tube (112) with sealing means at the end portions (114, 116).

11. The method of claims 7 to 10, wherein at least one end portion of the container (14, 112, 114, 116) includes releasable and sealable connection means (116, 118) for attachment to the outlet (111) of the cylinder-piston type system (100).

12. Use of a damping element (10, 108) according to any of the claims 1 to 6 in automotive applications, mechanical engineering, aerospace engineering, transport and naval engineering and civil engineering.

## Patentansprüche

1. Dämpfungselement (10, 108) zum Absorbieren mechanischer Anregungen, umfassend einen Behälter (14, 112, 114, 116), der ein viskoelastisches Material (12, 110) einkapselt, wobei der Behälter (14, 112, 114, 116) auf einen Druckpegel (p) mit Druck beaufschlagt ist, bei dem die Frequenz (50) des Dämpfungselements (10, 108) zum Absorbieren einer maximalen Energie (49) im Wesentlichen mit einer Frequenz der mechanischen Anregung (56) übereinstimmt, wobei das viskoelastische Material (12, 110) ein Schüttmaterial, ein körniges Material oder ein Gemisch aus einem Schutt- und einem körnigen Material umfasst.

2. Dämpfungselement (10, 108) nach Anspruch 1, wobei der Behälter (14, 112, 114, 116) druckdicht und/oder verformbar ist.

3. Dämpfungselement (10, 108) nach Anspruch 1 oder 2, wobei der Druck (p) im Inneren des Behälters (14, 112, 114, 116) des Dämpfungselements (10, 108) zwischen 0,1 und 1000 MPa und vorzugsweise zwischen 0,1 und 600 MPa liegt.

4. Dämpfungselement (10, 108) nach einem der vorhergehenden Ansprüche, wobei der Behälter (14, 112, 114, 116), der das viskoelastische Material (12, 110) einkapselt, so gestaltet ist, dass er eine Übertragung von anregenden mechanischen Belastungen durch das viskoelastische Material zu einem Trägeraufbau (18, 46) gestattet.

5. Dämpfungselement (10, 108) nach einem der vorhergehenden Ansprüche, wobei das viskoelastische Material (12, 110) aus einem zeitabhängigen Material, vorzugsweise Gummi und/oder einem thermoplastischen Material, besteht.

6. Dämpfungselement (10, 108) nach einem der vorhergehenden Ansprüche, wobei der Druckpegel (p) im Inneren des Behälters (14, 112, 114, 116) die Dämpfungseigenschaften des Dämpfungselements (10, 108) bestimmt.

7. Verfahren zur Herstellung eines Dämpfungselements (10, 108) nach einem der vorhergehenden Ansprüche, umfassend die folgenden Schritte:
(a) Bereitstellen eines Behälters (14, 112, 114, 116) und eines viskoelastischen Materials (12, 110);
(b) Pressen des viskoelastischen Materials (12, 110) in den Behälter (14, 112, 114, 116), um einen Druckpegel (p) zu erreichen, bei dem eine Frequenz, bei der das Dämpfungselement (10, 108) eine maximale Energie (49) absorbiert, im Wesentlichen mit einer Frequenz der mechanischen Anregung (56) übereinstimmt; und
(c) Abdichten des Behälters (14, 112, 114, 116), um den Druckpegel (p) von Schritt (b) im Wesentlichen aufrechtzuerhalten.

8. Verfahren nach Anspruch 7, wobei das viskoelastische Material (12, 110) durch ein System (100) vom zylinder-Kolben-Typ in den Behälter (14, 112, 114, 116) gepresst wird.

9. Verfahren nach Anspruch 7 oder 8, wobei der Behälter (14, 112, 114, 116) durch lösbare Verbindungsmittel (116, 120, 122) an einem Auslass (111) des Systems (100) vom Zylinder-Kolben-Typ angebracht wird.

10. Verfahren nach Anspruch 7 bis 9, wobei der Behälter (14, 112, 114, 116) aus einem Glas- und/oder Basalt- und/oder Graphitfaserrohr (112) mit Dichtungsmitteln an den Endabschnitten (114, 116) besteht.

11. Verfahren nach Anspruch 7 bis 10, wobei zumindest ein Endabschnitt des Behälters (14, 112, 114, 116) lösbare und abdichtbare Verbindungsmittel (116, 118) zur Anbringung an dem Auslass (111) des Systems (100) vom Zylinder-Kolben-Typ aufweist.

12. Verwendung eines Dämpfungselements (10, 108) nach einem der Ansprüche 1 bis 6 bei Kraftfahrzeuganwendungen, beim Maschinenbau, in der Raumfahrttechnik, der Transport- und der Schiffsbautechnik und im Bauwesen.

## Revendications

1. Elément d'amortissement (10, 108) pour absorber des excitations mécaniques, comprenant un récipient (14, 112, 114, 116) encapsulant un matériau viscoélastique (12, 110), dans lequel le récipient (14, 112, 114, 116) est pressurisé à un niveau de pression (p) auquel la fréquence (50) dudit élément d'amortissement (10, 108) pour absorber une énergie maximum (49) coïncide sensiblement avec une fréquence de l'excitation mécanique (56), le matériau viscoélastique (12, 110) comprenant un matériau en vrac, un matériau granulaire ou un mélange de matériaux en vrac et granulaire.

2. Elément d'amortissement (10, 108) selon la revendication 1, dans lequel ledit récipient (14, 112, 114, 116) est scellé sous pression et/ou est déformable.

3. Elément d'amortissement (10, 108) selon la revendication 1 ou 2, dans lequel la pression (p) à l'intérieur du récipient (14, 112, 114, 116) dudit élément d'amortissement (10, 108) est comprise entre 0,1 MPa et 1000 MPa, et de préférence entre 0,1 MPa et 600 MPa.

4. Elément d'amortissement (10, 108) selon l'une quelconque des revendications précédentes, dans lequel ledit récipient (14, 112, 114, 116) encapsulant ledit matériau viscoélastique (12, 110) est conçu de manière à permettre une transmission de charges mécaniques d'excitation à travers ledit matériau viscoélastique à une structure de support (18, 46).

5. Elément d'amortissement (10, 108) selon l'une quelconque des revendications précédentes, dans lequel ledit matériau viscoélastique (12, 110) est constitué d'un matériau dépendant du temps, de préférence de caoutchouc et/ou d'un matériau thermoplastique.

6. Elément d'amortissement (10, 108) selon l'une quelconque des revendications précédentes, dans lequel le niveau de pression (p) à l'intérieur du récipient (14, 112, 114, 116) détermine les caractéristiques d'amortissement de l'élément d'amortissement (10, 108).

7. Procédé de production d'un élément d'amortissement (10, 108) selon l'une des revendications précédentes, comprenant les étapes suivantes:
(a) prévoir un récipient (14, 112, 114, 116) et un matériau viscoélastique (12, 110);
(b) presser le matériau viscoélastique (12, 110) dans le récipient (14, 112, 114, 116) afin d'attendre un niveau de pression (p) auquel une fréquence, à laquelle ledit élément d'amortissement (10, 108) absorbe une énergie maximum (49), coïncide sensiblement avec une fréquence de l'excitation mécanique (56); et
(c) sceller le récipient (14, 112, 114, 116) de manière à maintenir sensiblement le niveau de pression (p) de l'étape (b).

8. Procédé selon la revendication 7, dans lequel le matériau viscoélastique (12, 110) est pressé dans le récipient (14, 112, 114, 116) par un système du type à piston et cylindre (100).

9. Procédé selon les revendications 7 ou 8, dans lequel le récipient (14, 112, 114, 116) est attaché à une sortie (111) du système du type à piston et cylindre (100) par l'entremise d'une connexion ouvrable (116, 120, 122).

10. Procédé selon les revendications 7 à 9, dans lequel le récipient (14, 112, 114, 116) est constitué d'un tube de fibre de verre et/ou de fibre de basalte et/ou de fibre de graphite (112) avec des moyens de scellage aux parties d'extrémité (114, 116).

11. Procédé selon les revendications 7 à 10, dans lequel au moins une partie d'extrémité du récipient (14, 112, 114, 116) comporte des moyens de connexion ouvrables et fermables (116, 118) pour une fixation à la sortie (111) du système du type à piston et cylindre (100).

12. Utilisation d'un élément d'amortissement (10, 108) selon l'une quelconque des revendications 1 à 6 dans des applications automobiles, en ingénierie mécanique, en ingénierie aérospatiale, en ingénierie du transport, en ingénierie navale et en ingénierie civile.
